# NEUE EUROPÄISCHE PATENTSCHRIFT

(11) **EP 2 138 332 B2**
(45) Veröffentlichungstag und Bekanntmachung des Hinweises auf die Entscheidung über den Einspruch: **22.05.2019**
(45) Hinweis auf die Patenterteilung: 16.05.2012
(21) Anmeldenummer: 09163417.0
(22) Anmeldetag: 22.06.2009
(51) Int. Cl.: B60D 1/14, B60D 1/06

(54) **Anhängekupplung**
Trailer hitch
Système d'attelage de remorque

(30) Priorität: 23.06.2008 DE 102008030626
(43) Veröffentlichungstag der Anmeldung: 30.12.2009
(73) Patentinhaber: Bosal ACPS Holding 2 B.V., 4131 PK Vianen (NL)
(72) Erfinder: Rimmelspacher, Bernhard, 76287, Rheinstetten (DE); Riehle, Jörg, 71679, Asperg (DE); Haustein, Hartmut, 75446, Wiernsheim (DE)
(74) Vertreter: Hoeger, Stellrecht & Partner Patentanwälte mbB

(56) Entgegenhaltungen:
- EP-A1- 1 022 164
- EP-A1- 1 022 164
- EP-A1- 1 428 697
- EP-A2- 0 089 614
- WO-A1-2006/065117
- DE-A1- 2 746 235
- DE-A1- 10 243 044
- DE-A1- 10 347 816
- DE-A1- 19 612 962
- DE-A1- 19 805 717
- DE-A1- 19 960 906
- DE-A1-102006 014 190
- DE-B- 1 023 974
- DE-T2-602004 006 201
- DE-U1- 7 808 690
- DE-U1- 29 506 341
- FR-A1- 2 310 233
- FR-A1- 2 310 233
- US-A- 5 702 118
- US-A- 5 702 118
- US-B1- 6 464 240
- US-B1- 6 464 240
- US-S- D 470 085
- Zeichnung Westfalia Querrohr, 305 270 604 101
- Deckblatt Westfalia, Katalog 2007, Katalog Seite 162, Volvo 7X, 320035; Katalog Seite 72, Lexus RX300, 335305; Katalog Seite 137, Toyota Avensis, 335301; Katalog Seite 138, Toyota Corolla, 335212
- Westfalia Katalog 2007, Rückseite mit Ausgabedatum
- Montageanleitung, Volvo 7XX und 9XX, 320035
- Montageanleitung Lexus RX300, 355305
- Montageanleitung Toyata Avensis, 335301
- Montageanleitung Toyota Corolla Hatchback, 335212
- SAP Ausdruck Volvo 7xx und 9xx, 320035
- SAP Ausdruck Lexus RX300, 355305
- SAP Ausdruck Toyota Avensis, 335301
- SAP Ausdruck Toyota Corolla Hatchback, 335212
- SAP Ausdruck Adresse Stahlgruber
- SAP Ausdruck Adresse Werthenbach

## Beschreibung

Die Erfindung betrifft eine Anhängekupplung umfassend einen Querträger, welcher sich mit seiner Längsrichtung quer zu einer Fahrzeuglängsrichtung erstreckt und mit einer Fahrzeugkarosserie eines Fahrzeugs verbindbar ist, einen Kugelhals, welcher an einem ersten Endbereich mittels einer Lagereinheit mit dem Querträger verbunden ist und an einem zweiten Endbereich eine Kupplungskugel trägt.

Derartige Anhängekupplungen sind aus dem Stand der Technik, beispielsweise aus DE 7 808 690U, die auch den Oberbegriff des Anspruchs 1 zeigt, bekannt. Bei diesen bekannten Anhängekupplungen ist der Querträger üblicherweise als Stahlrohr ausgebildet.

Derartige Anhängekupplungen haben ein großes Gewicht.

Der Erfindung liegt daher die Aufgabe zugrunde, eine Anhängekupplung der gattungsgemäßen Art derart zu verbessern, dass diese ein geringeres Gewicht aufweist.

Diese Aufgabe wird bei einer Anhängekupplung der eingangs beschriebenen Art erfindungsgemäß durch die Merkmale des Anspruchs 1 gelöst.

Der Vorteil der erfindungsgemäßen Lösung ist darin zu sehen, dass durch die Ausbildung des Querträgers als querschnittsformvariierender Hohlformkörper die Möglichkeit besteht, die Form des Hohlformkörpers an den Kräfteverlauf, insbesondere an die durch den Kugelhals in den Querträger eingeleiteten Biege- und Torsionskräfte anzupassen und somit durch die Formvarianz des Hohlformkörpers einen verbesserten Kräfteverlauf zu erreichen, der wiederum eine Reduzierung der Masse des Hohlformkörpers erlaubt.

Die Außenbereiche des Querträgers könnten dabei unterschiedliche Formen aufweisen.

Eine besonders vorteilhafte Lösung sieht jedoch vor, dass die Außenbereiche symmetrisch zu einer Mittelebene des Hohlformkörpers geformt sind, so dass in diesen die Kraftverhältnisse und der Kräfteverlauf sowie die Aufnahme der Biege- und Torsionskräfte in gleicher Weise erfolgt.

Für eine Optimierung der Kräfteaufnahme hat es sich als vorteilhaft erwiesen, wenn die Außenbereiche des Hohlformkörpers bezogen auf eine sich parallel zur Längsrichtung des Querträgers erstreckenden Mittelachse einer Fahrbahn zugewandte untere Wandbereiche aufweisen, die sich ausgehend von den äußeren Enden Richtung des Mittelbereichs in stärkerem Maße von der Mittelachse entfernen als obere, einer Fahrbahn abgewandte Wandbereiche.

Das heißt, dass der Hohlformkörper bezogen auf eine durch die Mittelachse hindurchverlaufende horizontale Ebene unsymmetrisch ausgebildet ist und insbesondere die Wandbereiche der Außenbereiche sich in unterschiedlichem Maße von der Mittelachse entfernen, das heißt in Richtung der Fahrbahn stärker nach unten gezogen sind, als der fahrbahnabgewandte obere Wandbereich in den Außenbereichen.

Hinsichtlich der Ausbildung selbst des Hohlformkörpers wurden bislang keine näheren Angaben gemacht.

So sieht eine vorteilhafte Lösung vor, dass der Hohlformkörper als um die Mittelachse herum über mindestens zwei Drittel der Erstreckung der Mittelachse geschlossen verlaufender Hohlformkörper ausgebildet ist, das heißt, dass der Hohlformkörper maximal über insgesamt ein Drittel der Erstreckung der Mittelachse Öffnungen aufweist, das heißt nicht geschlossen um die Mittelachse umläuft, wobei diese Öffnungen in Richtung der Mittelachse an mehreren Stellen und im Abstand voneinander angeordnet sein können.

Diese Lösung schafft eine optimierte stabile Form des Hohlformkörpers.

Besonders vorteilhaft ist es jedoch, wenn der Hohlformkörper als um die Mittelachse herum allseitig geschlossener Hohlformkörper ausgebildet ist, das heißt, dass der Hohlformkörper im Wesentlichen über seine gesamte Länge in Richtung der Mittelachse diese vollständig umschließt.

Eine derartige Ausbildung des Hohlformkörpers hat nicht nur den Vorteil, dass dieser einfach herstellbar ist, sondern auch den Vorteil, dass damit in dem Hohlformkörper die Möglichkeit besteht, den von dem Hohlformkörper umschlossenen Innenraum für die Aufnahme von Medien oder zusätzlichen Aggregaten auszunutzen, die somit nicht mehr in der Kraftfahrzeugkarosserie untergebracht werden müssen,

Beispielsweise besteht die Möglichkeit, den Raum im Hohlkörper zur Aufnahme von Flüssigkeiten, wie beispielsweise Waschwasser für die Scheiben, Zusatzflüssigkeit für Fahrzeugaggregate, zu verwenden oder auch zur Aufnahme von Aggregaten, beispielsweise für Pumpaggregate für den Scheibenwischer oder ähnliches zu verwenden.

Es besteht aber auch die Möglichkeit, den Innenraum des Hohlformkörpers zur Aufbewahrung von Fahrzeugausrüstung oder anderem Zubehör vorteilhaft einzusetzen. Es ist insbesondere möglich, in dem Hohlformkörper Werkzeug, Wagenheber, Notfallausrüstung, wie z.B. Warndreieck oder Verbandskasten anzuordnen, wobei in diesem Fall eine verschließbare Zugangsöffnung erforderlich ist.

Der Aufbau des Hohlformkörpers kann in unterschiedlichster Art und Weise erfolgen, beispielsweise wäre es denkbar, den Hohlformkörper aus einem bereits geschlossenen rohrähnlichen Teil durch Expansion zu formen.

Besonders einfach lässt sich der Hohlformkörper jedoch dadurch herstellen, wenn dieser aus zwei Schalenkörpern gebildet ist.

Die zwei Schalenkörper können nun bezüglich ihrer Form in unterschiedlicher Art und Weise ausgebildet sein. Insbesondere kann der Hohlformkörper in unterschiedlichster Weise in zwei Schalenkörper aufgeteilt werden.

Eine besonders zweckmäßige Aufteilung sieht vor, dass einer der Schalenkörper einen fahrzeugabgewandten Bereich des Hohlformkörpers bildet.

Eine derartige Lösung hat den großen Vorteil, dass sich-damit die von dem Kugelhals auf den Querträger wirkenden Biegekräfte vorteilhaft in diesen Schalenkörper einleiten und durch diesen verteilen lassen, ohne dass eine Verbindung zu einem anderen Schalenkörper einer sehr starken Biegebelastung unterliegt.

Ferner ist es vorteilhaft, wenn ein anderer der Schalenkörper einen fahrzeugzugewandten Bereich des Hohlformkörpers bildet, so dass auch dieser Schalenkörper in einfacher Weise geeignet ist, die durch den Kugelhals einwirkenden Biegekräfte zu übernehmen.

Zweckmäßigerweise sind dabei die Schalenkörper mittels Schalenkörperverbindungen miteinander verbunden. Diese Schalenkörperverbindungen können in unterschiedlicher Art und Weise ausgebildet sein.

Die Schalenkörperverbindungen können prinzipiell auf jeder Seite des Hohlformkörpers verlaufen.

Um jedoch die Schalenkörperverbindungen möglichst wenig durch Biegekräfte und Torsionskräfte zu belasten, sieht eine vorteilhafte Lösung vor, dass die eine Schalenverbindung auf einer fahrbahnzugewandten Seite der Schalenkörper verläuft.

Eine weitere vorteilhafte Lösung sieht vor, dass eine Schalenverbindung auf einer fahrbahnabgewandten Seite der Schalenkörper verläuft.

Eine besonders vorteilhafte Ausführung der erfindungsgemäßen Schalenkörperverbindung sieht vor, dass sich die Schalenkörper in Längsrichtung des Querträgers erstreckt und somit, zumindest abschnittsweise entlang der Längsrichtung des Querträgers die Schalenkörper relativ zueinander fixiert.

Um eine möglichst weitgehende Verbindung der Schalenkörper zu erreichen, ist vorzugsweise vorgesehen, dass die Schalenkörperverbindung sich in der Längsrichtung über mindestens zwei Drittel einer Ausdehnung der Schalenkörper in dieser Richtung erstreckt.

Noch besser ist es, wenn die Schalenkörperverbindung sich in der Längsrichtung über mindestens 80% der Erstreckung der Schalenkörper in dieser Richtung erstreckt.

Besonders günstig ist es dabei, wenn die Schalenverbindung eine in der Längsrichtung zusammenhängend verlaufende Verbindung ist, so dass die Schalenkörper über einen wesentlichen Teil relativ zueinander fixiert sind und somit in diesem Bereich Biegekräfte und Torsionskräfte aufeinander übertragen können.

Beispielsweise könnten die Schalenkörper an mehreren Stellen durch mehrere an diesen angreifende Verbindungselemente miteinander verbunden sein.

Eine vorteilhafte Lösung sieht jedoch vor, dass jede Schalenkörperverbindung einen Streifenbereich eines Schalenkörpers mit einem Streifenbereich eines anderen Schalenkörpers verbindet.

Eine derartige stoffschlüssige Verbindung wäre beispielsweise eine Schweißverbindung oder Klebeverbindung, bei welcher die Streifenbereiche aneinanderstoßen.

Eine besonders vorteilhafte Lösung sieht jedoch vor, dass die die Schalenkörperverbindung bildenden Streifenbereiche einander überlappen und flächig aneinander anliegen.

Beispielsweise können dabei die Streifenbereiche in Richtung einer Trennebene flanschartig von den Schalenkörpern abstehen und dabei aneinander anliegen.

Eine besonders vorteilhafte Form sieht jedoch vor, dass ein Streifenbereich eines Schalenkörpers an einer Innenseite eines Streifenbereichs des anderen Schalenkörpers flächig anliegt und dass sich die Streifenbereiche dabei insbesondere quer zu einer Trennebene der Schalenkörper erstrecken.

Besonders vorteilhaft ist es dabei, wenn die Streifenbereiche stoffschlüssig miteinander verbunden sind.

Vorteilhaft ist es dabei, wenn die aneinander anliegenden Streifenbereiche durch eine flächenhafte stoffschlüssige Verbindung miteinander verbunden werden können.

Hinsichtlich der stoffschlüssigen Verbindung wäre es beispielsweise denkbar, eine Hartlotverbindung vorzusehen.

Eine besonders günstige Art der Verbindung der Streifenbereiche sieht jedoch eine flächige Klebeschicht zwischen den Streifenbereichen vor.

Alternativ oder ergänzend zu einer stoffschlüssigen Verbindung ist eine formschlüssige Schalenkörperverbindung vorgesehen.

Hinsichtlich der Formvarianz des Hohlformkörpers wurden im Hinblick auf die bisher beschriebenen Ausführungsbeispiele lediglich Definitionen bezüglich in den Außenbereichen gegeben.

Gemäß der Erfindung ist vorgesehen dass der Mittelbereich des Hohlformkörpers eine Einschnürung aufweist.

Eine derartige Einschnürung kann auf jeder Seite des Hohlformkörpers angeordnet sein.

Beispielsweise sind derartige Einschnürungen auf einer fahrzeugabgewandten Rückseite des Hohlformkörpers angeordnet.

Besonders günstig ist es jedoch, wenn die Einschnürung auf einer der Fahrbahn zugewandten Seite des Mittelbereichs liegt.

Erfindungsgemäß ist die Einschnürung so ausgebildet, dass sie einen Aufnahmeraum für einen Kugelhals in Ruhestellung bildet, so dass damit durch die Einschnürung eine kompaktere Bauweise der Anhängekupplung erreicht werden kann, insbesondere in der Ruhestellung des Kugelhalses, so dass insgesamt die Bauhöhe der Einheit aus Querträger und Kugelhals möglichst gering gehalten werden kann.

Beispielsweise ist dabei die Einschnürung so ausgebildet, dass im Bereich der Einschnürung eine Querschnittsfläche vorliegt, die kleiner ist als eine Querschnittsfläche am Übergang der Außenbereiche zu dem Mittelbereich.

Der Kugelhals kann grundsätzlich in unterschiedlichster Art und Weise, beispielsweise als Halbkreis, gebogen ausgebildet sein. Erfindungsgemäß ist vorgesehen, dass der Kugelhals einen zwischen dem den Kugelkopf tragenden zweiten Endbereich und dem mit der Lagereinheit verbundenen ersten Endbereich verlaufenden Mittelarm aufweist und dass sich in der Ruhestellung der Mittelarm längs des Querträgers erstreckt.

Besonders zweckmäßig ist es dabei, wenn in der Ruhestellung der Mittelarm dem Mittelbereich des Hohlformkörpers zugewandt im Aufnahmeraum liegt und dass sich die Endbereiche des Kugelhalses von dem Mittelbereich weg erstrecken.

Bezüglich der Fixierung der Lagereinheit an dem Mittelbereich wurden bislang keine näheren Angaben gemacht.

So sieht eine vorteilhafte Lösung vor, dass an dem Mittelbereich Halteelemente für die den Kugelhals haltende Lagereinheit angeordnet sind.

Diese Halteelemente könnten in unterschiedlichster Art und Weise an dem Hohlformkörper gehalten sein. Eine vorteilhafte Lösung sieht vor, dass die Halteelemente an einer fahrzeugzugewandten Seite des Hohlformkörpers gehalten sind.

Ferner ist es vorteilhaft, wenn Halteelemente an einer fahrzeugabgewandten Seite des Hohlformkörpers gehalten sind.

Ferner wurde die Lagereinheit bislang nicht spezifiziert.

Eine vorteilhafte Lösung sieht vor, dass die Lagereinheit ein Schwenklager ist, an dessen Lagerbasis die mindestens eine Halteeinheit angreift.

Ferner wurde bislang nichts zur Fixierung des Hohlformkörpers an der Fahrzeugkarosserie ausgeführt.

So sieht eine vorteilhafte Lösung vor, dass der Hohlformkörper mit Seitenträgern verbunden ist, die ihrerseits mit der Fahrzeugkarosserie verbunden sind.

Vorzugsweise sind dabei die Seitenträger so angeordnet, dass sie an den Außenbereichen des Hohlformkörpers angreifen.

Vorzugsweise sind dabei die Seitenträger nicht mit den Enden des Hohlformkörpers fixiert.

Zweckmäßigerweise ist daher vorgesehen, dass die Seitenträger mindestens einen an dem Hohlformkörper anlegbaren Flanschlappen aufweisen. Vorzugsweise ist dabei der Flanschlappen flächig an dem Hohlformkörper angelegt und passt sich somit der Oberflächenstruktur des Hohlformkörpers an.

Noch vorteilhafter ist die Fixierung zwischen dem Hohlformkörper und den Seitenträgern, wenn die Seitenträger zwei auf gegenüberliegenden Seiten des Hohlformkörpers anliegende Flanschlappen aufweisen.

Vorzugsweise liegt dabei einer der Flanschlappen auf einer der fahrbahnzugewandten Seite und einer der Flanschlappen auf einer fahrbahnabgewandten Seite an.

Ferner sind die Seitenträger vorzugsweise so ausgebildet, dass sie den mindestens einen Flanschlappen tragende Strebe aufweisen.

Die Strebe ist dabei vorzugsweise im Querschnitt C-förmig ausgebildet und umfasst beispielsweise einen Querflansch und beiderseits des Querflansches angeordnete Flanschteile.

Vorzugsweise ist dabei der Flanschlappen an ein Flanschteil der C-förmigen Strebe angeformt.

Hinsichtlich der Ausbildung des Materials zur Ausbildung des Hohlformkörpers wurden bislang keine näheren Angaben gemacht.

So wäre es beispielsweise denkbar, den Hohlformkörper aus Kunststoffmaterial, beispielsweise aus faserverstärktem Kunststoffmaterial oder insbesondere kohlenfaserverstärktem Kunststoffmaterial herzustellen.

Eine andere vorteilhafte Lösung sieht vor, dass der Hohlformkörper aus Blechmaterial, insbesondere aus einem hochfesten Blechmaterial hergestellt ist, so dass dadurch die Wandstärke reduziert werden kann.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine perspektivische Ansicht von vorne links auf ein erstes Ausführungsbeispiel der erfindungsgemäßen Anhänge- kupplung;
- Fig. 2: eine Draufsicht von hinten auf das erste Ausführungsbeispiel der erfindungsgemäßen Anhängekupplung;
- Fig. 3: eine Draufsicht von oben auf das erste Ausführungsbeispiel der erfindungsgemäßen Anhängekupplung;
- Fig. 4: eine Seitenansicht von links auf das erste Ausführungs- beispiel der erfindungsgemäßen Anhängekupplung mit teilweise geschnittener Fahrzeugkarosserie;
- Fig. 5: eine Ansicht ähnlich Fig. 1 auf das erste Ausführungsbeispiel mit in Ruhestellung stehendem Kugelhals;
- Fig. 6: eine Ansicht ähnlich Fig. 2 mit dem in Ruhestellung stehendem Kugelhals;
- Fig. 7: eine Ansicht ähnlich Fig. 4 mit dem in Ruhestellung stehendem Kugelhals;
- Fig. 8: einen Schnitt durch einen Querträger der erfindungs- gemäßen Anhängekupplung längs Linie 8-8 in Fig. 1;
- Fig. 9: eine Darstellung ähnlich Fig. 1 eines zweiten Ausführungs- beispiels einer erfindungsgemäßen Anhängekupplung und
- Fig. 10: eine Darstellung ähnlich Fig. 1 eines dritten Ausführungs- beispiels einer erfindungsgemäßen Anhängekupplung.

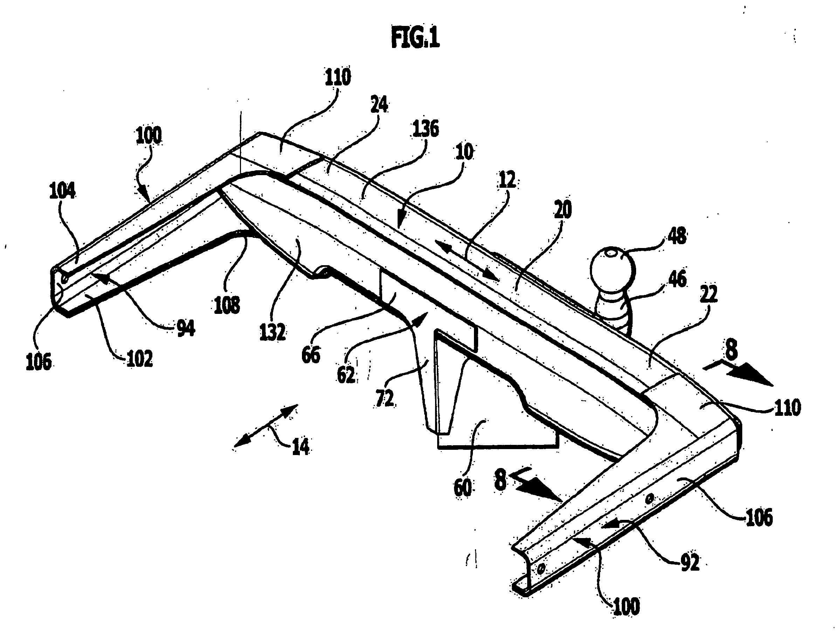

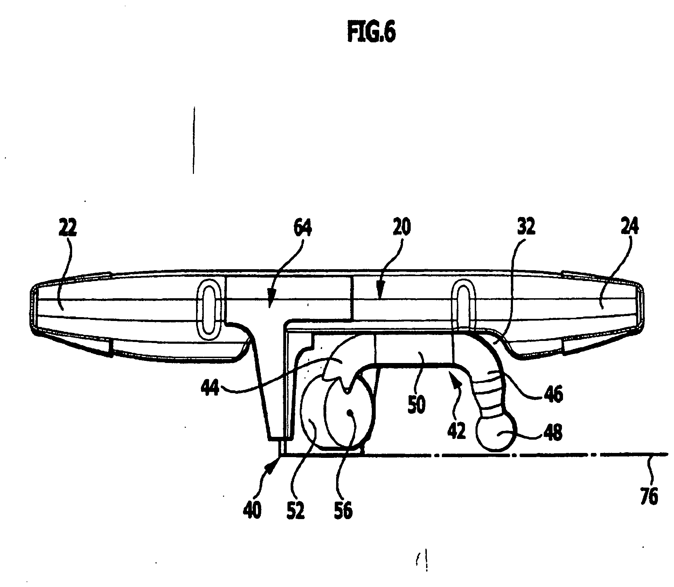

Ein in den Fig. 1 bis 8 dargestelltes Ausführungsbeispiel einer erfindungsgemäßen Anhängekupplung umfasst einen Querträger 10, welcher sich mit seiner Längsrichtung 12 quer zu einer Fahrzeuglängsrichtung 14 erstreckt, und zwar jeweils zwischen seinen äußeren Enden 16 und 18.

Dabei umfasst der Querträger 10 ausgehend von den äußeren Enden 16 und 18 in Richtung auf einen Mittelbereich 20 zu erstreckende Außenbereiche 22 und 24, welche sich von einer an den äußeren Enden 16 und 18 vorliegenden Querschnittsfläche Qa zunehmend erweitern und angrenzend an den Mittelbereich 20 Querschnittsflächen Qi aufweisen, die größer sind als die Querschnittsflächen Qa, vorzugsweise erheblich größer sind als die Querschnittsflächen Qa.

Insbesondere sind dabei die Außenbereiche 22, 24 so ausgebildet, dass deren Querschnittsfläche Q ausgehend von der Querschnittsfläche Qa stetig zunimmt bis zur Querschnittsfläche Qi.

Vorzugsweise sind dabei die Außenbereiche 22, 24 des Querträgers 10 so ausgebildet, dass sie symmetrisch zu einer Längsmittelebene 26 der Anhängekupplung und auch des Fahrzeugs, an welchem die Anhängekupplung montiert ist, verlaufen, wobei sich die Längsmittelebene 26 parallel zur Fahrzeuglängsrichtung 14 erstreckt.

Der Mittelbereich 20 des Querträgers 10 schließt sich zunächst mit derselben Querschnittsfläche Qi an die Außenbereiche 22 und 24 an, ist jedoch auf einer einer Fahrbahn 28 zugewandten Unterseite mit einer Einschnürung 30 versehen, so dass im Bereich der Einschnürung die Querschnittsfläche Qe gegenüber der Querschnittsfläche Qi im Anschluss an die Außenbereiche 22, 24 reduziert ist.

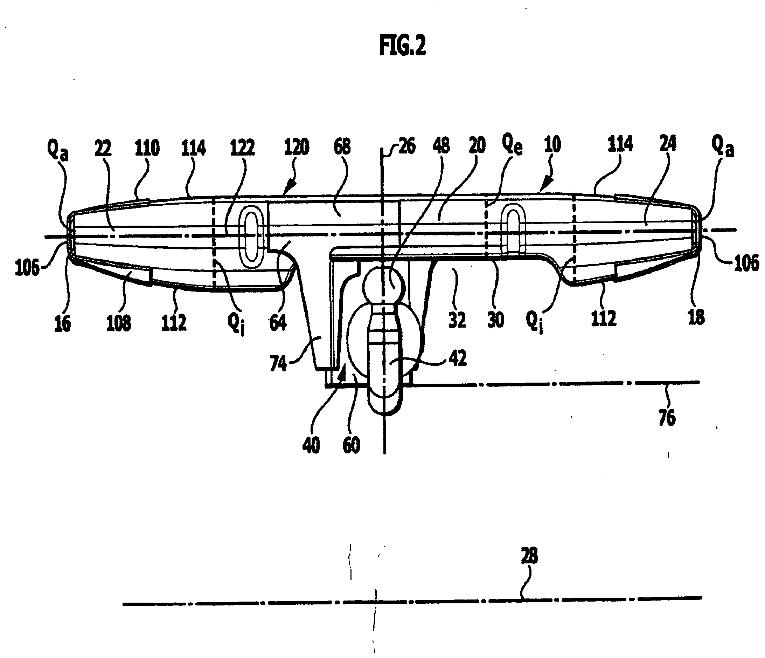

Die Einschnürung 30 ist bei dem dargestellten Ausführungsbeispiel, wie in Fig. 2 dargestellt, asymmetrisch zur Längsmittelebene 26 angeordnet und beginnt im Abstand von dem Außenbereich 22, so dass sich der Mittelbereich 20 ausgehend vom Außenbereich 22 noch mit einer mindestens der Querschnittsfläche Qi entsprechenden Querschnittsfläche bis zur Einschnürung 30 erstreckt, während sich im Anschluss an den Außenbereich 24 im Mittelbereich 20 die Einschnürung 30 im Wesentlichen unmittelbar anschließt.

Die Einschnürung 30 dient dabei dazu, auf einer der Fahrbahn 28 zugewandten Unterseite des Querträgers 10 einen Aufnahmeraum 32 zu schaffen, dessen Funktion nachfolgend noch erläutert wird.

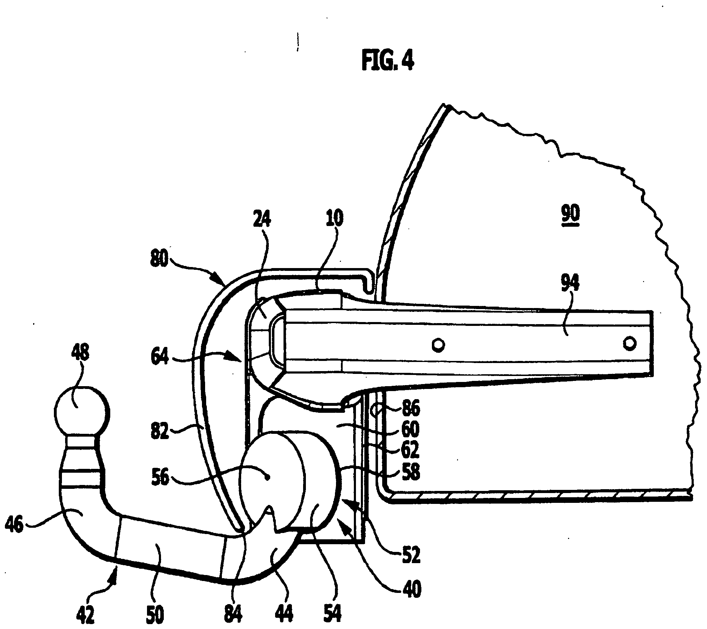

An dem Mittelbereich 20 ist mittels einer im Bereich des Aufnahmeraums 30 angeordneten und von dem Mittelbereich sich in Richtung der Fahrbahn 28 erstreckenden Lagereinheit 40 ein als Ganzes mit 42 bezeichneter Kugelhals gehalten, welcher, wie in Fig. 4 dargestellt, einen mit der Lagereinheit 40 verbundenen Endbereich 44 aufweist und einen dem Endbereich 44 gegenüberliegenden zweiten Endbereich 46, welcher eine Kupplungskugel 48 trägt. Ferner liegt zwischen den Endbereichen 44 und 46 ein Mittelarm 50 des Kugelhalses 42. In den Fig. 1 bis 4 steht der Kugelhals 42 in Arbeitsstellung und erstreckt sich in der Längsmittelebene 26

Die Lagereinheit 40 ist bei dem dargestellten Ausführungsbeispiel mit einem als Ganzes mit 52 bezeichneten Schwenklager versehen, welches einen mit dem ersten Endbereich 44 verbundenen Schwenklagerkopf 54 aufweist, der seinerseits um eine Schwenkachse 56 gegenüber einem fahrzeugfesten Lagerteil 58 gelagert ist.

Das fahrzeugfeste Lagerteil 58 ist seinerseits an einer Lagerbasis 60 angeordnet, die mit dem Mittelbereich 20 des Querträgers 10 im Bereich der Einschnürung 30 verbunden ist, beispielsweise, wie in Fig. 1 und 2 dargestellt, über Halteelemente 62 und 64, die einerseits über Halteflansche 66 und 68 mit dem Mittelbereich 20 des Querträgers 10 verbunden sind und andererseits Halteaufnahmen 72 und 74 aufweisen, mit welchen die Lagerbasis 60 verbunden ist.

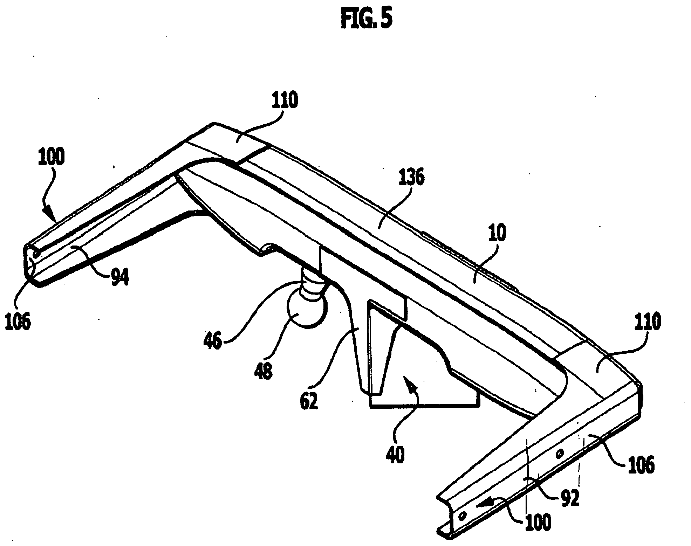

Durch das Schwenklager 52 besteht die Möglichkeit, den Kugelhals 42 mit der Kupplungskugel 48 von einer in den Fig. 1 bis 4 dargestellten Arbeitsstellung in eine in den Fig. 5, 6 und 7 dargestellte Ruhestellung zu verschwenken, in welcher der Kugelhals 42 in dem von der Einschnürung 30 geschaffenen Aufnahmeraum 32 und oberhalb einer durch einen tiefsten Punkt der Lagereinheit 40 verlaufenden horizontalen Ebene 76 angeordnet ist, wobei bei dem dargestellten Ausführungsbeispiel auch die Kupplungskugel 58 oberhalb der Ebene 76 liegt. Bei anderen geometrischen Konstellationen, ist es aber auch denkbar, dass die Kupplungskugel 48 noch teilweise oder auch ganz unterhalb der Ebene 76, das heißt auf einer der Fahrbahn 28 zugewandten Seite derselben liegt.

Bei dem dargestellten ersten Ausführungsbeispiel schaffen die Einschnürung 30 und der durch diese gebildete Aufnahmeraum 32 die Möglichkeit, den Kugelhals 42 insbesondere mit dem Mittelarm 50 in der Ruhestellung in möglichst großer Höhe über der Fahrbahn 28 dadurch anzuordnen, dass der Mittelarm 50 nahe unterhalb des Mittelbereichs 20 in deren Aufnahmeraum 32 liegt und sich die Endbereiche 44, 46 vom Mittelbereich 20 weg in Richtung der Fahrbahn 28 erstrecken.

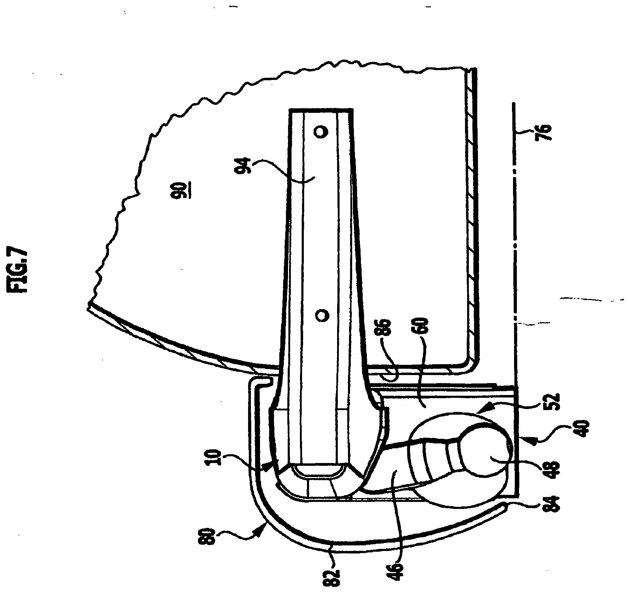

Wie in Fig. 4 und 7 dargestellt, ist der Querträger 10 unterhalb einer Stoßfängereinheit 80 angeordnet und von einer Stoßfängerverkleidung 82 überdeckt, wobei insbesondere ein unteres Ende 84 der Stoßfängerverkleidung 82 derart nahe der Fahrbahn 28 angeordnet ist, dass dieser ungefähr in Höhe der Ebene 76 liegt, die durch den tiefsten Punkt der Lagereinheit 40 verläuft.

Damit ist der Querträger 10 und der Kugelhals 42 in seiner Ruhestellung durch die Stoßfängerverkleidung 82 für einen Benutzer des Kraftfahrzeugs gegen Sicht abgedeckt.

Vorzugsweise liegt der Querträger 10 unmittelbar hinter einer Heckschürze 86 einer als Ganzes mit 90 bezeichneten Fahrzeugkarosserie und ist mit der Fahrzeugkarosserie 90 über Seitenträger 92, 94 verbunden, wobei die Seitenträger 92 und 94 die zugsteife Verbindung zwischen dem Querträger 10 und der Fahrzeugkarosserie 90 darstellen.

Die Seitenträger 92 und 94 umfassen, wie exemplarisch am Beispiel des Seitenträgers 74 in Fig. 1 dargestellt, eine Strebe 100, die ein unteres Flanschteil 102, ein oberes Flanschteil 104 und ein diese Flanschteile 102 und 104 verbindendes Querflanschteil 106 umfasst, die C-förmig relativ zueinander angeordnet sind, wobei das Querflanschteil 106 den Querträger 10 im Bereich seiner Enden 16 und 18 übergreift, jedoch nicht mit den Enden 16 und 18 unmittelbar verbunden ist.

Vielmehr erstrecken sich die Flanschteile 102 und 104 mit Flanschlappen 108 und 110 über einen Teil der Außenbereiche 22 und 24 des Querträgers 10 und sind vorzugsweise flächig mit den Außenbereichen 22 und 24 verbunden.

Die Verbindung zwischen den Flanschlappen 108 und 110 der Seitenträger 92 und 94 sowie der Außenbereiche 22 und 24 des Querträgers 10 erfolgt beispielsweise durch eine Klebeverbindung, wobei in diesem Fall die Flanschlappen 108 und 110 im Wesentlichen vollflächig an Teilflächen der Außenbereiche 22 und 24 des Querträgers 10 an Unterseiten 112 bzw. Oberseiten 114 der Außenbereiche 22 und 24 flächig anliegen.

Der Querträger 10 ist als formvariierender Hohlformkörper 120 ausgebildet, der sich um eine Mittelachse 122 von dem einen Ende 16 bis zum anderen Ende 18 erstreckt und dabei die Mittelachse 122 über ihre Erstreckung in der Längsrichtung 12 im Wesentlichen ummantelt. Vorzugsweise erstreckt sich die Ummantelung der Mittelachse 122 über mindestens 80% von deren Länge, so dass nur gegebenenfalls geringe Teilabschnitte der Mittelachse 122 nicht vollständig ummantelt sind.

Bei der dargestellten Ausführungsform ist der Hohlformkörper 120 längs der Mittelachse 122 vollständig geschlossen, das heißt, dass dieser keine die Stabilität und Steifigkeit beeinträchtigenden Durchbrüche aufweist.

Die Vergrößerung der Querschnittsfläche von der Querschnittsfläche Qa zur Querschnittsfläche Qi der Außenbereiche 22 und 24 erfolgt beispielsweise - wie in Fig. 2 dargestellt - dadurch, dass sich die Unterseite 112 bei ihrem Verlauf von den Enden 16, 18 zum Mittelteil 20 in stärkerem Maße von der Mittelachse 122 entfernt als die Oberseite 114 und dient dabei dazu, die Torsionssteifigkeit des Hohlformkörpers 120 mit zunehmendem Abstand von den Seitenträgern 92 und 94 zu erhöhen, da durch den Kugelhals 42 auf den Mittelbereich 20 Torsionsmomente ausgeübt werden, die von dem Mittelbereich 20 auf die Außenbereiche 22 und 24 übertragen werden müssen und von den Außenbereichen 22 und 24 mit möglichst großer Torsionssteifigkeit aufgenommen und auf die Seitenträger 92 und 94 übertragen werden müssen.

Ferner überträgt der Kugelhals 42 auf den Mittelbereich 20 Biegekräfte, die ebenfalls von dem Mittelbereich 20 über die Außenbereiche 22 und 24 auf die Seitenträger 92 und 94 übertragen werden müssen. Auch für diese Biegekräfte ist es von Vorteil, wenn die Außenbereiche 22 und 24 des Querträgers 10 sich von der Querschnittsfläche Qa zur Querschnittsfläche Qi vergrößernde Querschnittsfläche aufweisen.

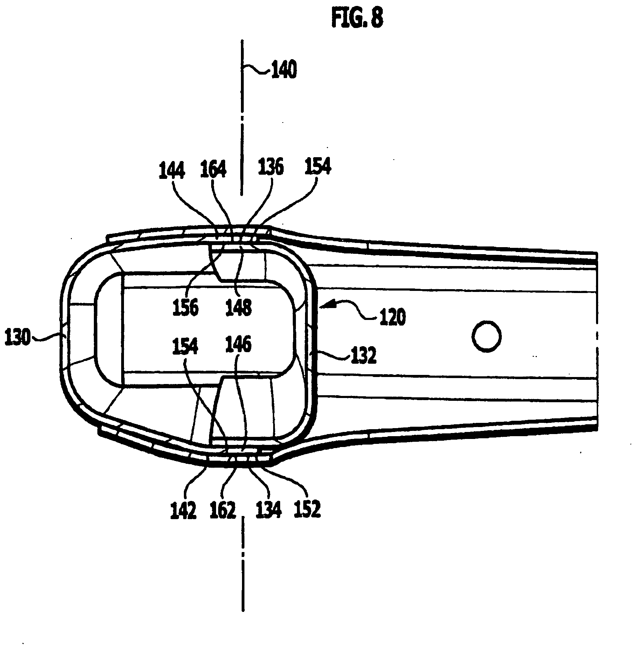

Ein derartiger erfindungsgemäße Hohlformkörper 120 mit in Richtung der Mittelachse 122 variierender Querschnittsfläche ist, wie in Fig. 8 dargestellt, vorzugsweise dadurch herstellbar, dass dieser aus einem ersten Schalenkörper 130 und einem zweiten Schalenkörper 132 aufgebaut ist, wobei der erste Schalenkörper 130 auf einer der Heckschürze 86 der Fahrzeugkarosserie 90 abgewandten Seite angeordnet ist, während der zweite Schalenkörper 132 auf einer der Heckschürze 86 der Fahrzeugkarosserie 90 zugewandten Seite angeordnet ist und wobei beide Schalenkörper 130, 132 über eine der Fahrbahn 28 zugewandte untere Schalenkörperverbindung 134 und eine der Fahrbahn 28 abgewandte obere Schalenkörperverbindung 136 miteinander verbunden sind.

Die Schalenkörperverbindungen 134 und 136 erstrecken sich dabei über die Längsrichtung 12 des Querträgers 10 von dem einen Ende 16 zum anderen Ende 18 und werden dabei gebildet durch sich quer zu einer Trennebene 140 erstreckende Streifenbereiche 142 und 144 des ersten Schalenkörpers 130 sowie sich quer zu der Trennebene 140 erstreckende Streifenbereiche 146 und 148 des zweiten Schalenkörpers 132, wobei der zweite Schalenkörper 132 mit seinen Streifenbereichen 146 und 148 in den ersten Schalenkörper 130 eingreift und somit mit Außenseiten 152 und 154 der Streifenbereiche 146 und 148 an Innenseiten 154 und 156 der Streifenbereiche 142 und 144 des ersten Schalenkörpers 130 flächenhaft anliegen.

Vorzugsweise erfolgt eine Verbindung zwischen den Streifenbereichen 142 und 146 bzw. 144 und 148 durch eine zwischen diesen angeordnete Klebeschicht 162 und 164, die somit sich flächenhaft im Bereich der Überlappungsfläche ausdehnt und insbesondere im Wesentlichen über die gesamte Erstreckung der Schalenkörperverbindungen 134 und 136 verläuft.

Bei diesem Ausführungsbeispiel sind vorzugsweise auch die Halteflansche 66 und 68 durch eine Klebeverbindung mit den Schalenkörpern 130 und 132 verbunden, wobei der Halteflansch 66 am Schalenkörper 132 angeklebt ist und der Halteflansch 68 am Schalenkörper 130.

Ferner sind vorzugsweise auch die Flanschlappen 108 und 110 der Seitenteile 92 und 94 über eine Klebeverbindung und zwar jeweils mit beiden Schalenkörpern 130 und 132, nämlich einmal im Bereich der Unterseite 112 und im Bereich der Oberseite 114 verbunden.

Die Klebeverbindung erfolgt vorzugsweise über eine Folie, welche den Kleber trägt, die sich somit in einfacher Weise flächig auflegen lässt und dann durch Erhitzen der zu verbindenden Teile die stoffschlüssige Verbindung zwischen diesen herstellt.

Insbesondere hat eine flächige Klebeverbindung den Vorteil, dass sich die dabei bildende Verbindungsschicht auch an Oberflächentoleranzen zwischen den jeweiligen Teilen anpasst.

Alternativ zum Herstellen einer Klebeverbindung ist es vorteilhaft, eine Hartlötverbindung einzusetzen, da auch Hartlot den Vorteil hat, dass diese sich an Oberflächentoleranzen anpasst und eine feste und dauerhafte flächige Verbindung zwischen den zu verbindenden Teilen ermöglicht.

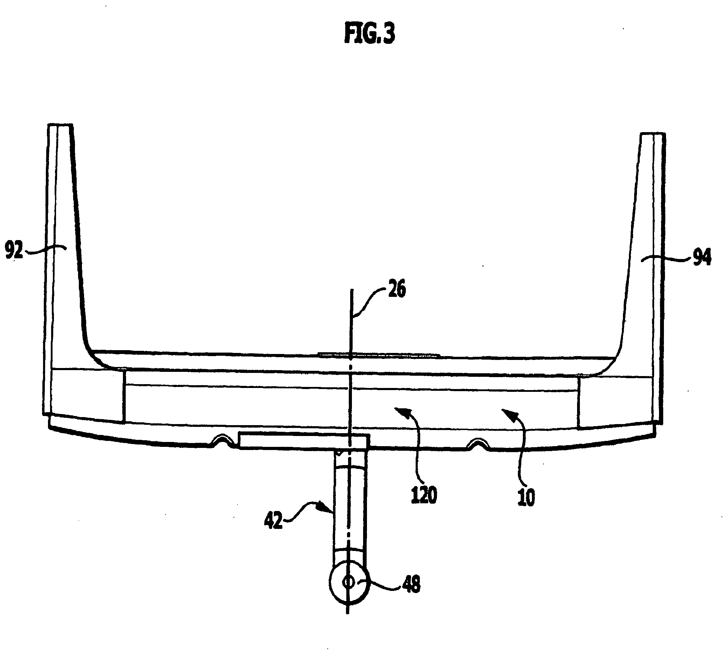

Ferner sind beispielsweise zur Erhöhung der Verwindungssteifigkeit oder um Raum für Sensoren, beispielsweise Rückfahrsensoren, zu schaffen, im Mittelbereich 20 des Schalenkörpers 130 noch - wie in Fig. 2 und 3 dargestellt - Einprägungen 168 auf einer fahrzeugabgewandten Rückseite angeordnet, die symmetrisch zur Längsmittelebene 26 liegen.

Die Schalenkörper 130, 132 können aus Metallblech hergestellt und beispielsweise durch ein Umformen in die gewünschte Form gebracht werden. Im einfachsten Fall ist das Metallblech ein Stahlblech.

Es ist aber auch denkbar, die Schalenkörper aus Kunststoff, insbesondere faserverstärktem Kunststoff herzustellen.

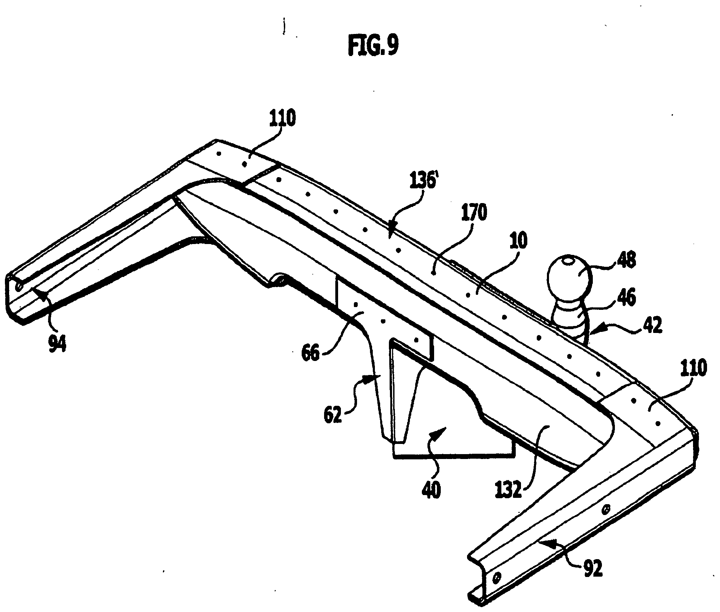

Bei einem weiteren Ausführungsbeispiel einer erfindungsgemäßen Anhängekupplung, dargestellt in Fig. 9, sind die Schalenkörperverbindungen 134' und 136' sowie auch die Verbindungen zwischen den Flanschlappen 108 und 110 mit dem Querträger 10 als auch die Verbindungen der Halteflansche 66 und 68 mit dem Querträger 10 so ausgeführt, dass einerseits lokale Formschlussverbindungen, beispielsweise durch Nieten 170, vorgesehen sind, die jedoch vorzugsweise noch ergänzt sind durch flächige stoffschlüssige Verbindungen, beispielsweise die im Zusammenhang mit dem ersten Ausführungsbeispiel beschriebenen Klebeverbindungen.

Diese Lösung hat den Vorteil, dass durch die lokalen formschlüssigen Verbindungen zunächst die zu verbindenden Teile so weit miteinander verbunden werden können, dass diese als Einheit verbleiben und beispielsweise ein Kleber zunächst die Verbindung nicht aufrechterhalten muss, sondern das Aushärten des Klebers nachfolgend in einem gesonderten Aufheizschritt erfolgen kann, wobei bis zur Herstellung der Formschlussverbindung mittels des Klebers die Teile durch die lokalen formschlüssigen Verbindungen 170 flächig und fest in Anlage gehalten werden, insbesondere, da keine Belastung der Teile auftritt, wie sich im Gebrauchszustand der Anhängekupplung auftritt.

Damit lassen sich die zu verbindenden Teile einfach und rasch miteinander verbinden, wobei diese einfache Verbindung nicht dazu geeignet sein muss, die späteren im Betrieb der Anhängekupplung auftretenden Kräfte aufzunehmen, sondern diese Verbindung durch das später im Produktionsprozess, beispielsweise im Zusammenhang mit der Lacktrocknung, erfolgende Aushärten der Klebeschicht entsteht.

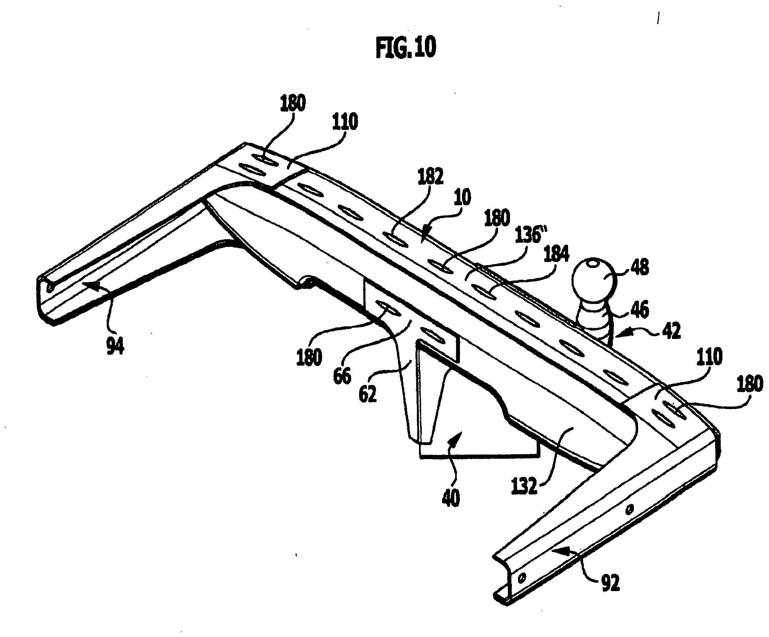

Bei einem dritten Ausführungsbeispiel einer erfindungsgemäßen Anhängekupplung, dargestellt in Fig. 10, sind die Schalenkörperverbindungen 134" und 136", allerdings nur dargestellt im Zusammenhang mit der Schalenkörperverbindung 136" keine flächigen Verbindungen, sondern Fügeverbindungen, nämlich sogenannte Lochschweißverbindungen 180, bei welchen längs eines Randes 182 von Ausnehmungen 184, die beispielsweise in den Streifenbereichen 142 und 144 vorgesehen sind, eine Schweißnaht gelegt wird, die den Randbereich 182 mit dem darunter liegenden Streifenbereich 146 bzw. 148 stoffschlüssig verbindet.

Durch derartige Lochschweißungen 180 lassen sich auch Verbindungen zwischen den Flanschlappen 108 und 110, dargestellt am Beispiel der Flanschlappen 110 in Fig. 10, herstellen.

In gleicher Weise lassen sich derartige Lochschweißverbindungen 180 auch zwischen den Halteflanschen 66 und 68, in Fig. 10 dargestellt am Beispiel der Halteflansche 66 und dem Querträger 10, bei dem in Fig. 10 dargestellten Fall dem Schalenteil 132 des Querträgers 10, herstellen.

Derartige Lochschweißverbindungen 180 haben den Vorteil, dass sie die Stabilität des Materials der Schalenteile 130 und 132 des Querträgers oder der Flanschlappen 108 und 110 sowie der Halteflansche 66 und 68 nicht thermisch beeinflussen und somit in dem jeweiligen Material keine Fügeveränderungen hervorrufen.

Vorzugsweise sind derartige Lochschweißverbindungen 180 als Laserschweißverbindungen ausgeführt, die aufgrund der Tatsache, dass nur eine geringe Menge von angrenzendem Material erschmolzen wird, sich für die Herstellung einer festen Verbindung eignen.

Es können aber auch derartige Lochschweißverbindungen 180 ergänzend zu flächigen Verbindungen, beispielsweise Klebeverbindungen, vorgesehen sein, um in gleicher Weise wie beim zweiten Ausführungsbeispiel die zu verbindenden Teile, das heißt die Schalenkörper 130 und 132 im Bereich ihrer Streifenbereiche 142 und 144 bzw. 146 und 148, relativ zueinander zu fixieren, so dass die flächige Klebeverbindung später aushärten kann, um eine ergänzende oder die eigentliche dauerhafte Verbindung zwischen diesen herzustellen.

In gleicher Weise können auch die Verbindungen zwischen den Flanschlappen 108 und 110 der Seitenteile 92 und 94 und dem Querträger 10 oder auch den Halteflanschen 66 und 68 und dem Querträger 10 hergestellt werden.

## Patentansprüche

1. Anhängekupplung umfassend
einen Querträger (10), welcher sich mit seiner Längsrichtung (12) quer zu einer Fahrzeuglängsrichtung erstreckt und mit einer Fahrzeugkarosserie eines Fahrzeugs verbindbar ist, einen Kugelhals (42), welcher an einem ersten Endbereich (44) mittels einer Lagereinheit (40) mit dem Querträger (10) verbunden ist, und an einem zweiten Endbereich (46) eine Kupplungskugel (48) trägt, wobei der Querträger (10) als querschnittsformvariierender Hohlformkörper (120) ausgebildet ist, welcher einen Mittelbereich (20) und sich beiderseits des Mittelbereichs (20) an diesen anschließende und sich bis zu äußeren Enden (16, 18) des Hohlformkörpers (120) erstreckende Außenbereiche (22, 24) aufweist und wobei eine Querschnittsform der Außenbereiche (22, 24) ausgehend von den äußeren Enden (16, 18) in Richtung des Mittelbereichs (20) eine sich zunehmend vergrößernde Querschnittsfläche aufweist,
**dadurch gekennzeichnet, dass** der Mittelbereich (20) des Hohlformkörpers (120) eine Einschnürung (30, 168) aufweist, dass die Einschnürung (30) einen Aufnahmeraum (32) für den Kugelhals (42) in Ruhestellung bildet, dass der Kugelhals einen zwischen dem den Kugelkopf (48) tragenden zweiten Endbereich (46) und dem mit der Lagereinheit (40) verbundenen ersten Endbereich (44) verlaufenden Mittelarm (50) aufweist und dass sich in der Ruhestellung der Mittelarm (50) längs des Querträgers (10) erstreckt.

2. Anhängekupplung nach Anspruch 1, **dadurch gekennzeichnet, dass** die Außenbereiche des Hohlformkörpers (120) bezogen auf eine sich parallel zur Längsrichtung (12) des Querträgers (10) erstreckende Mittelachse (122) einer Fahrbahn (28) zugewandte untere Wandbereiche (112) aufweisen, die sich ausgehend von den äußeren Enden (16, 18) in Richtung des Mittelbereichs (20) im stärkeren Maße von der Mittelachse (122) entfernen als obere, einer Fahrbahn (28) abgewandten Wandbereiche (114).

3. Anhängekupplung nach Anspruch 1 oder 2, **dadurch gekennzeichnet, dass** der Hohlformkörper (120) aus zwei Schalenkörpern (130, 132) gebildet ist und dass einer (130) der Schalenkörper (130, 132) einen fahrzeugabgewandten Bereich des Hohlformkörpers (120) bildet.

4. Anhängekupplung nach Anspruch 3, **dadurch gekennzeichnet, dass** einer (132) der Schalenkörper (130, 132) einen fahrzeugzugewandten Bereich des Hohlformkörpers (120) bildet.

5. Anhängekupplung nach einem der voranstehenden Ansprüche, **dadurch gekennzeichnet, dass** eine Schalenkörperverbindung (134, 136) einen Streifenbereich (142; 144) eines Schalenkörpers (130) mit einem Streifenbereich (146, 148) eines anderen Schalenkörpers (132) verbindet und dass die aneinander anliegenden Streifenbereiche (142, 146; 144, 148) durch eine flächige Klebeschicht miteinander verbunden sind.

6. Anhängekupplung nach einem der voranstehenden Ansprüche, **dadurch gekennzeichnet, dass** eine Schalenkörperverbindung (134', 136') eine formschlüssige Verbindung ist.

7. Anhängekupplung nach einem der voranstehenden Ansprüche, **dadurch gekennzeichnet, dass** die Einschnürung (30) auf einer fahrbahnzugewandten Seite des Mittelbereichs (20) liegt.

8. Anhängekupplung nach einem der voranstehenden Ansprüche, **dadurch gekennzeichnet, dass** die Einschnürung (30) eine Querschnittsfläche aufweist, die kleiner ist als eine Querschnittsfläche (Qi) am Übergang der Außenbereiche (22, 24) zu dem Mittelbereich (20).

9. Anhängekupplung nach einem der voranstehenden Ansprüche, **dadurch gekennzeichnet, dass** in der Ruhestellung der Mittelarm (50) dem Mittelbereich (20) des Hohlformkörpers (120) zugewandt in dem Aufnahmeraum (32) liegt und dass sich die Endbereiche (44, 46) des Kugelhalses (42) von dem Mittelbereich (20) weg erstrecken.

10. Anhängekupplung nach einem der voranstehenden Ansprüche, **dadurch gekennzeichnet, dass** der Hohlformkörper (120) mit Seitenträgern (92, 94) verbunden ist, dass die Seitenträger (92, 94) mindestens einen an den Hohlformkörper (120) anlegbaren Flanschlappen (108,110) aufweisen und dass der Flanschlappen (108, 110) flächig an dem Hohlformkörper (120) anliegt.

11. Anhängekupplung nach Anspruch 10, **dadurch gekennzeichnet, dass** die Seitenträger (92, 94) zwei auf gegenüberliegenden Seiten des Hohlformkörpers (120) anliegende Flanschlappen (108, 110) aufweisen.

12. Anhängekupplung nach Anspruch 10 oder 11, **dadurch gekennzeichnet, dass** die Seitenträger (92, 94) eine den mindestens einen Flanschlappen (108, 110) tragende Strebe (96, 98) aufweisen.

## Claims

1. Trailer hitch comprising
a cross-member (10), which has its longitudinal direction (12) extending transversely to a longitudinal direction of a vehicle and which can be connected to a body of a vehicle, a ball neck (42), which at a first end region (44) is connected to the cross-member (10) by means of a bearing unit (40) and at a second end region (46) carries a coupling ball (48), the cross-member (10) being in the form of a hollow shaped body (120) which varies in cross-sectional shape and has a central region (20) and outer regions (22, 24) which adjoin the central region (20) on both sides and extend as far as outer ends (16, 18) of the hollow shaped body (120), and a cross-sectional shape of the outer regions (22, 24) having a cross-sectional area that increases progressively in the direction of the central region (20), starting from the outer ends (16, 18),
**characterized in that** the central region (20) of the hollow shaped body (120) has a narrowed portion (30, 168), **in that** the narrowed portion (30) forms, in the rest position, an accommodating space (32) for the ball neck (42), **in that** the ball neck has a central arm (50) running between the second end region (46), which carries the ball head (48), and the first end region (44), which is connected to the bearing unit (40), and **in that**, in the rest position, the central arm (50) extends along the cross-member (10).

2. Trailer hitch according to Claim 1, **characterized in that**, in relation to a centre axis (122) extending parallel to the longitudinal direction (12) of the cross-member (10), the outer regions of the hollow shaped body (120) have lower wall regions (112) which are directed towards a roadway (28) and diverge from the centre axis (122) in the direction of the central region (20), starting from the outer ends (16, 18), to a more pronounced extent than upper wall regions (114), which are directed away from a roadway (28).

3. Trailer hitch according to Claim 1 or 2, **characterized in that** the hollow shaped body (120) is formed from two shell bodies (130, 132) and **in that** one (130) of the shell bodies (130, 132) forms a region of the hollow shaped body (120) which is directed away from the vehicle.

4. Trailer hitch according to Claim 3, **characterized in that** one (132) of the shell bodies (130, 132) forms a region of the hollow shaped body (120) which is directed towards the vehicle.

5. Trailer hitch according to any of the preceding claims, **characterized in that** a shell-body connection (134, 136) connects a strip region (142; 144) of one shell body (130) to a strip region (146, 148) of another shell body (132) and **in that** the strip regions (142, 146; 144, 148) engaging against one another are connected to one another by an extensive adhesive layer.

6. Trailer hitch according to any of the preceding claims, **characterized in that** a shell-body connection (134', 136') is a positive connection.

7. Trailer hitch according to any of the preceding claims, **characterized in that** the narrowed portion (30) is located on a side of the central region (20) which is directed towards the roadway.

8. Trailer hitch according to any of the preceding claims, **characterized in that** the narrowed portion (30) has a cross-sectional area which is less than a cross-sectional area (Qi) at the transition from the outer regions (22, 24) to the central region (20).

9. Trailer hitch according to any of the preceding claims, **characterized in that**, in the rest position, the central arm (50) is located in the accommodating space (32), facing towards the central region (20) of the hollow shaped body (120), and **in that** the end regions (44, 46) of the ball neck (42) extend away from the central region (20).

10. Trailer hitch according to any of the preceding claims, **characterized in that** the hollow shaped body (120) is connected to side members (92, 94), **in that** the side members (92, 94) have at least one flange plate (108, 110) which can be positioned against the hollow shaped body (120), and **in that** the flange plate (108, 110) engages face-to-face against the hollow shaped body (120).

11. Trailer hitch according to Claim 10, **characterized in that** the side members (92, 94) have two flange plates (108, 110) engaging against opposite sides of the hollow shaped body (120).

12. Trailer hitch according to Claim 10 or 11, **characterized in that** the side members (92, 94) have a strut (96, 98) which carries the at least one flange plate (108, 110).

## Revendications

1. Attelage pour remorque, comportant une traverse (10), qui s'étend par sa longueur (12) transversalement à une direction longitudinale de véhicule, et qui peut être raccordée à une carrosserie d'un véhicule, un col de boule d'attelage (42), qui, à une première zone d'extrémité (44), est raccordé à la traverse (10) par une unité de palier (40), et qui, à une deuxième zone d'extrémité (46), supporte une boule d'attelage (48), où la traverse (10) est réalisée comme un corps moulé creux (120) à forme de section transversale variable, présentant une partie centrale (20) et des zones extérieures (22, 24) adjacentes à ladite partie centrale (20) et s'étendant des deux côtés de celle-ci jusqu'aux extrémités (16, 18) extérieures du corps moulé creux (120), et où une forme de section transversale des zones extérieures (22, 24) présente une extension de section allant en s'agrandissant depuis les extrémités extérieures (16, 18) vers la partie centrale (20), **caractérisé en ce que** la partie centrale (20) du corps moulé creux (120) présente un étranglement (30, 168), et **en ce que** ledit étranglement (30, 168) forme un espace de logement (32) pour le col de boule d'attelage (42) en position de repos, **en ce que** le col de boule d'attelage comporte un bras central (50) s'étendant entre la deuxième zone d'extrémité (46) supportant la boule d'attelage (48) et la première zone d'extrémité (44) raccordée à l'unité de palier (40), et **en ce qu'**en position de repos, ledit bras central (50) s'étend le long de la traverse (10).

2. Attelage pour remorque selon la revendication 1, **caractérisé en ce que** les zones extérieures du corps moulé creux (120) présentent des parties inférieures de paroi (112), par rapport à un axe médian (122) s'étendant parallèlement à la longueur (12) de la traverse (10), orientées une chaussée (28) et qui, depuis les extrémités extérieures (16, 18) vers la partie centrale (20), s'éloignent dans une plus grande mesure de l'axe médian (122) que des parties de paroi (114) éloignées d'une chaussée (28).

3. Attelage pour remorque selon la revendication 1 ou la revendication 2, **caractérisé en ce que** le corps moulé creux (120) est formé de deux corps de coque (130, 132), et **en ce qu'**un (130) des corps de coque (130, 132) forme une zone du corps moulé creux (120) éloignée du véhicule.

4. Attelage pour remorque selon la revendication 3, **caractérisé en ce qu'**un (132) des corps de coque (130, 132) forme une zone du corps moulé creux (120) opposée au véhicule.

5. Attelage pour remorque selon l'une des revendications précédentes, **caractérisé en ce qu'**une connexion de corps de coque (134, 136) raccorde une zone en bande (142 ; 144) d'un corps de coque (130) à une zone en bande (146, 148) d'un autre corps de coque (132), et **en ce que** les zones en bande (142, 146 ; 144, 148) adjacentes sont raccordées entre elles par une couche de colle en nappe.

6. Attelage pour remorque selon l'une des revendications précédentes, **caractérisé en ce qu'**une connexion de corps de coque (134', 136') est une connexion par correspondance de forme.

7. Attelage pour remorque selon l'une des revendications précédentes, **caractérisé en ce que** l'étranglement (30) est réalisé sur un côté orienté vers la chaussée de la partie centrale (20).

8. Attelage pour remorque selon l'une des revendications précédentes, **caractérisé en ce que** l'étranglement (30) présente une extension de section transversale inférieure à une extension de section transversale (Qi) à la transition entre les zones extérieures (22, 24) et la partie centrale (20).

9. Attelage pour remorque selon l'une des revendications précédentes, **caractérisé en ce qu'**en position de repos, le bras central (50) est disposé dans l'espace de logement (32), orienté vers la partie centrale (20) du corps moulé creux (120), et **en ce que** les zones d'extrémité (44, 46) du col de boule d'attelage (42) s'étendent en s'éloignant de la partie centrale (20).

10. Attelage pour remorque selon l'une des revendications précédentes, **caractérisé en ce que** le corps moulé creux (120) est raccordé à des longerons latéraux (92, 94), **en ce que** lesdits longerons latéraux (92, 94) comportent au moins une patte de bride (108, 110) applicable contre le corps moulé creux (120), et **en ce que** la patte de bride (108, 110) repose à plat contre le corps moulé creux (120).

11. Attelage pour remorque selon la revendication 10, **caractérisé en ce que** les longerons latéraux (92, 94) comportent deux pattes de bride (108, 110) appliquées contre des faces opposées du corps moulé creux (120).

12. Attelage pour remorque selon la revendication 10 ou la revendication 11, **caractérisé en ce que** les longerons latéraux (92, 94) comportent une entretoise (96, 98) supportant la ou les pattes de bride (108, 110).
